# EUROPEAN PATENT SPECIFICATION

(11) **EP 4 342 950 B1**
(45) Date of publication and mention of the grant of the patent: **02.07.2025**
(21) Application number: 22197866.1
(22) Date of filing: 26.09.2022
(51) Int. Cl.: C08L 69/00

(54) **POLYCARBONATE COMPOSITION, ARTICLES FORMED THEREFROM, AND METHODS FOR THE MANUFACTURE THEREOF**
POLYCARBONATZUSAMMENSETZUNG, DARAUS GEFORMTE ARTIKEL UND VERFAHREN ZUR HERSTELLUNG DAVON
COMPOSITION DE POLYCARBONATE, ARTICLES FORMÉS À PARTIR DE CELLE-CI ET PROCÉDÉS DE FABRICATION DE CELLE-CI

(43) Date of publication of application: 27.03.2024
(73) Proprietor: SHPP Global Technologies B.V., 4612 PX Bergen op Zoom (NL)
(72) Inventor: Lugger, Jody Ann Martin, Bergen op Zoom (NL); van Heerbeek, Hendrikus Petrus Cornelis, Barendrecht (NL); van der Mee, Mark Adrianus Johannes, Etten Leur (NL)
(74) Representative: Balder IP Law, S.L.

(56) References cited:
- WO-A1-2022/107030
- WO-A1-2022/189998
- US-A1- 2020 369 875

## Description

### BACKGROUND

This disclosure relates to polycarbonate compositions, articles formed therefrom, and their methods of manufacture. The composition described herein can exhibit advantageous properties such as improved aesthetic properties, flame retardance, and improved chemical resistance.

Polycarbonates are useful in a wide variety of applications at least in part because of their good balance of properties, such as moldability, heat resistance and impact properties, among others. WO2022/107030 A1 relates to polycarbonate compositions that have balanced mechanical properties including low temperature impact, chemical resistance, and flame retardancy. Despite extensive research on these materials over the years, there still remains a need in the art for improved polycarbonate compositions that meet increasingly stringent industry standards.

For example, polycarbonate-polysiloxane copolymers can have good mechanical properties and low temperature impact resistance. However, blends of a polycarbonate homopolymer with such a polycarbonate-polysiloxane can result in poor aesthetics of molded parts. Aesthetic defects can include excess haze, limited color space capability, pearlescence, or other surface defects related to molding such as streaks and flow lines. Previous attempts to improve the aesthetics can compromise other desirable properties such as low temperature impact, flame retardance, and chemical resistance.

There accordingly remains a need in the art for polycarbonate compositions that can have balanced aesthetics, flame retardance, and chemical resistance.

### SUMMARY

An aspect of the present disclosure is a polycarbonate composition comprising: 80 to 90 weight percent of a bisphenol A homopolycarbonate having a weight average molecular weight of 28,000 g/mol or more, determined by gel permeation chromatography relative to linear bisphenol A polycarbonate standards; and 10 to 20 weight percent of a polycarbonate-siloxane copolymer having a siloxane content of 30 to 70 weight percent, based on the total weight of the polycarbonate-siloxane copolymer; wherein the composition comprises less than 5 weight percent of a polycarbonate-siloxane copolymer having a siloxane content of less than 30 weight percent.

Another aspect is a method of making the polycarbonate composition, the method comprising melt-mixing the components of the composition, and, optionally, extruding the composition.

Another aspect is an article comprising the polycarbonate composition.

The above described and other features are exemplified by the following detailed description.

### DETAILED DESCRIPTION

The present inventors have discovered that a polycarbonate composition including particular amounts of a bisphenol A homopolycarbonate having a particular molecular weight and a polycarbonate-siloxane copolymer can provide a desirable combination of properties. For example, compositions according to the present disclosure were found to exhibit improved aesthetic properties, flame retardance, flowability, and chemical resistance.

Accordingly, an aspect of the present disclosure is a polycarbonate composition. The polycarbonate composition comprises a bisphenol A homopolycarbonate. The bisphenol A homopolycarbonate has repeating structural carbonate units of the formula (1). 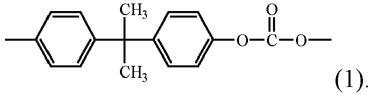 Bisphenol A polycarbonate homopolymers can be manufactured by processes such as interfacial polymerization and melt polymerization, which are known, and are described, for example, in WO 2013/175448 A1 and WO 2014/072923 A1, from bisphenol A ((2,2-bis(4-hydroxyphenyl)propane, or BPA). An endcapping agent can be included during polymerization to provide end groups, for example monocyclic phenols such as phenol, p-cyanophenol, and C₁-₂₂ alkyl-substituted phenols such as p-cumyl-phenol, resorcinol monobenzoate, and p-tertiarybutyl phenol, monoethers of diphenols, such as p-methoxyphenol, monoesters of diphenols such as resorcinol monobenzoate, functionalized chlorides of aliphatic monocarboxylic acids such as acryloyl chloride and methacryloyl chloride, and mono-chloroformates such as phenyl chloroformate, alkyl-substituted phenyl chloroformates, p-cumyl phenyl chloroformate, and toluene chloroformate. Phenol and para-cumylphenol are specifically mentioned. Combinations of different endcapping agents can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 4.0 weight percent (wt%), for example, 0.05 to 2.0 wt%. Combinations comprising linear polycarbonates and branched polycarbonates can be used. In an aspect, the bisphenol A polycarbonate homopolymer can be a linear bisphenol A polycarbonate homopolymer, optionally endcapped with phenol or para-cumylphenol.

The bisphenol A homopolycarbonate can have a weight average molecular weight of 28,000 g/mol or more, for example 28,000 to 100,000 g/mol, or 28,000 to 75,000 g/mol, or 28,000 to 40,000 g/mol, or 28,000 to 38,000 g/mol, or 29,000 to 45,000 g/mol. Molecular weight can be determined by gel permeation chromatography (GPC), using a crosslinked styrene-divinylbenzene column and calibrated to bisphenol A polycarbonate references. GPC samples are prepared at a concentration of 1 milligram per milliliter (mg/mL) and are eluted at a flow rate of 1.5 ml per minute.

In an aspect, more than one bisphenol A polycarbonate homopolymer can be present. For example, the bisphenol A polycarbonate homopolymer can comprise a first bisphenol A polycarbonate homopolymer having a first weight average molecular weight, and a second bisphenol A polycarbonate homopolymer having a second weight average molecular, wherein the first and second weight average molecular weights are not the same.

Preferably the weight average molecular weight of both the first and second bisphenol A polycarbonate homopolymers is greater than or equal to 28,000 g/mol. When present, a weight ratio of a first bisphenol A polycarbonate homopolymer having a weight average molecular weight of 28,000 g/mol or more relative to a second bisphenol A polycarbonate homopolymer having a weight average molecular weight of 28,000 g/mol or more can be 10:1 to 1:10, or 5:1 to 1: 5, or 3:1 to 1:3, or 2:1 to 1:2.

In an aspect, the bisphenol A homopolycarbonate can comprise a first linear bisphenol A homopolycarbonate having a weight average molecular weight of 32,000 to 38,000 grams per mole, preferably 34,000 to 36,000 grams per mole, as determined by gel permeation chromatography relative to linear bisphenol A polycarbonate standards; or a second linear bisphenol A homopolycarbonate having a weight average molecular weight of 29,000 to 32,000 grams per mole, preferably 30,000 to 31,000 grams per mole, as determined by gel permeation chromatography relative to linear bisphenol A polycarbonate standards; or a combination thereof.

In an aspect, the composition can optionally comprise a bisphenol A homopolycarbonate having a weight average molecular weight that is less than 28,000 g/mol. For example, the composition can further comprise a bisphenol A homopolycarbonate having a molecular weight of 18,000 to 24,000 g/mol, preferably 20,000 to 22,000 g/mol, as determined by gel permeation chromatography relative to linear bisphenol A polycarbonate standards. When present, the bisphenol A homopolycarbonate having a weight average molecular weight that is less than 28,000 g/mol is present in a weight ratio of bisphenol A homopolycarbonate having a weight average molecular weight of 28,000 g/mol or more to bisphenol A homopolycarbonate having a molecular weight of less than 28,000 g/mol of greater than 1:1, preferably greater than 2:1.

The combined weight average molecular weight of all bisphenol A homopolycarbonates present in the composition is greater than or equal to 28,000 g/mol. Stated another way, when a bisphenol A homopolycarbonate having a weight average molecular weight that is less than 28,000 g/mol is present in the composition, it can be present in an amount such that the combined weight average molecular weight of all bisphenol A homopolycarbonates present in the composition is greater than or equal to 28,000 g/mol.

The bisphenol A homopolycarbonate can be present in the composition in an amount of 80 to 90 weight percent, based on the total weight of the composition. Within this range, the bisphenol A homopolycarbonate can be present in an amount of, for example, 80 to 87 weight percent, or 80 to 85 weight percent, , each based on the total weight of the composition.

In addition to the bisphenol A homopolycarbonate, the composition further comprises a polycarbonate-siloxane copolymer. Polycarbonate-siloxane copolymers are also known as polycarbonate-siloxanes. The polycarbonate-siloxane copolymer comprises carbonate repeat units and siloxane units. The carbonate units can be derived from a dihydroxy aromatic compound such as a bisphenol of formula (2) or a diphenol of formula (3) 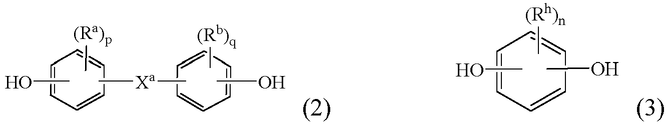 wherein in formula (2) R^{a} and R^{b} are each independently C₁₋₁₂ alkyl, C₁₋₁₂ alkenyl, C₃₋₈ cycloalkyl, or C₁₋₁₂ alkoxy, p and q are each independently 0 to 4, and X^{a} is a single bond, -O-, -S-, -S(O)-, -S(O)₂-, -C(O)-, a C₁₋₁₁ alkylidene of formula -C(R^{c})(R^{d}) - wherein R^{c} and R^{d} are each independently hydrogen or C₁₋₁₀ alkyl, or a group of the formula -C(=R^{e})-wherein R^{e} is a divalent C₁₋₁₀ hydrocarbon group; and in formula (3), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4.

In an aspect in formulas (2) and (3), R^{a} and R^{b} are each independently C₁₋₃ alkyl or C₁₋₃ alkoxy, p and q are each independently 0 or 1, and X^{a} is a single bond, -O-, -S(O)-, -S(O)₂-, -C(O)-, a C₁₋₁₁ alkylidene of formula -C(R^{c})(R^{d}) - wherein R^{c} and R^{d} are each independently hydrogen or C₁₋₁₀ alkyl, each R^{h} is independently bromine, a C₁₋₃ alkyl, a halogen-substituted C₁₋₃ alkyl, and n is 0 to 1.

In an aspect in formulas (2) and (3), R^{a} and R^{b} are each independently C₁₋₃ alkyl, p and q are each independently 0 or 1, and X^{a} is a single bond, -O-, -S(O)-, -S(O)₂-, -C(O)-, a C₁₋₁₁ alkylidene of formula -C(R^{c})(R^{d}) - wherein R^{c} and R^{d} are each independently hydrogen or C₁₋₁₀ alkyl, each R^{h} is independently bromine, a C₁₋₃ alkyl, a halogen-substituted C₁₋₃ alkyl, and n is 0 to 1.

In an aspect in formula (2), p and q are each independently 0, and X^{a} is a single bond, -O-, -S(O)-, -S(O)₂-, -C(O)-, a C₁₋₁₁ alkylidene of formula -C(R^{c})(R^{d}) - wherein R^{c} and R^{d} are each independently hydrogen or C₁₋₁₀ alkyl.

In an aspect in formula (2), p and q are each independently 0, and X^{a} is a C₁₋₁₁ alkylidene of formula -C(R^{c})(R^{d}) - wherein R^{c} and R^{d} are each independently hydrogen or C₁₋₁₀ alkyl.

In an aspect in formula (2), p and q are each independently 0, and X^{a} is a C₁₋₁₁ alkylidene of formula -C(R^{c})(R^{d}) - wherein R^{c} and R^{d} are each independently C₁₋₁₀ alkyl, preferably methyl.

Examples of bisphenol compounds (2) include BPA, 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'- tetramethylspiro(bis)indane (spirobiindane bisphenol), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole. A combination comprising different bisphenol compounds can be used.

Examples of diphenol compounds (3) included resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like. A combination comprising different diphenol compounds can be used.

In an aspect the carbonate units can be bisphenol carbonate units derived from bisphenols of formula (2). A preferred bisphenol is bisphenol A (BPA).

The siloxane units (also referred to as polysiloxane blocks) are optionally of formula (4) 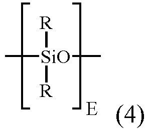 wherein each R is independently a C₁₋₁₃ monovalent organic group. For example, R can be a C₁₋₁₃ alkyl, C₁-₁₃ alkoxy, C₂-₁₃ alkenyl, C₂-₁₃ alkenyloxy, C₃-₆ cycloalkyl, C₃-₆ cycloalkoxy, C₆-₁₄ aryl, C₆-₁₀ aryloxy, C₇-₁₃ arylalkylene, C₇-₁₃ arylalkylenoxy, C₇-₁₃ alkylarylene, or C₇-₁₃ alkylarylenoxy. The foregoing groups can be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups can be used in the same copolymer.

In an aspect, R is a C₁₋₃ alkyl, C₁₋₃ alkoxy, C₃₋₆ cycloalkyl, C₃₋₆ cycloalkoxy, C₆₋₁₄ aryl, C₆₋₁₀ aryloxy, C₇ arylalkylene, C₇ arylalkylenoxy, C₇ alkylarylene, or C₇ alkylarylenoxy. In an aspect, R is methyl, trifluoromethyl, or phenyl, preferably methyl.

The value of E in formula (4) can vary widely depending on the type and relative amount of each component in the polycarbonate composition, the desired properties of the composition, and like considerations. Generally, E has an average value of 2 to 1,000, or 2 to 500, 2 to 200, or 2 to 125, 5 to 80, or 10 to 70. In an aspect, E has an average value of 10 to 80 or 10 to 60, or 10 to 40. in still another aspect, E has an average value of 40 to 80 or 40 to 70, and in yet another aspect, E has an average value of 10 to 100, or 20 to 60, or 30 to 50.

In an aspect, the siloxane units are of formula (5) 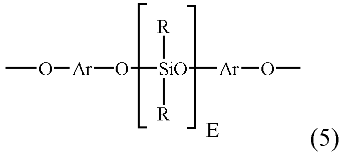 wherein E is as defined above in the context of formula (4); each R can be the same or different, and is as defined above in the context of formula (4); and Ar can be the same or different, and is a substituted or unsubstituted C₆₋₃₀ arylene, wherein the bonds are directly connected to an aromatic moiety. Ar groups in formula (5) can be derived from a C₆₋₃₀ dihydroxyarylene compound, for example a dihydroxy compound of formula (3). Exemplary dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane, or a combination thereof.

Specific examples of siloxane units of formula (5) include those of the formulas (5a) and (5b).

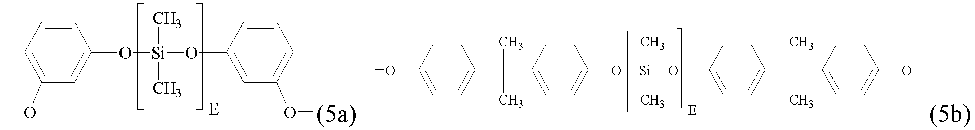

In an aspect, the siloxane units are of formula (6) 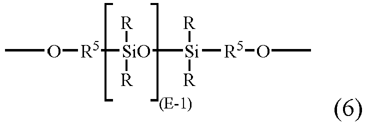 wherein R and E are as described above in the context of formula (4), and each R⁵ is independently a divalent C₁-₃₀ organic group, and wherein the polymerized polysiloxane unit is the reaction residue of its corresponding dihydroxy compound. In an aspect, the polydiorganosiloxane blocks are of formula (7): 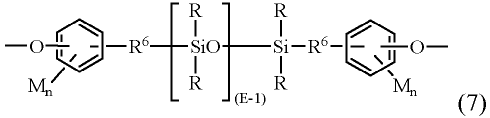 wherein R and E are as defined above in the context of formula (4). R⁶ in formula (7) is a divalent C₂-₈ aliphatic group. Each M in formula (7) can be the same or different, and can be a halogen, cyano, nitro, C₁-₈ alkylthio, C₁-₈ alkyl, C₁-₈ alkoxy, C₂-₈ alkenyl, C₂-₈ alkenyloxy, C₃-₈ cycloalkyl, C₃-₈ cycloalkoxy, C₆-₁₀ aryl, C₆-₁₀ aryloxy, C₇-₁₂ aralkyl, C₇-₁₂ arylalkylenoxy, C₇-₁₂ alkylarylene, or C₇-₁₂ alkylarylenoxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In an aspect, R is methyl, or a combination of methyl and trifluoropropyl, or a combination of methyl and phenyl. In an aspect, R is methyl, M is methoxy, n is one, and R⁶ is a divalent C₁₋₃ aliphatic group. Specific polydiorganosiloxane blocks are of the formula 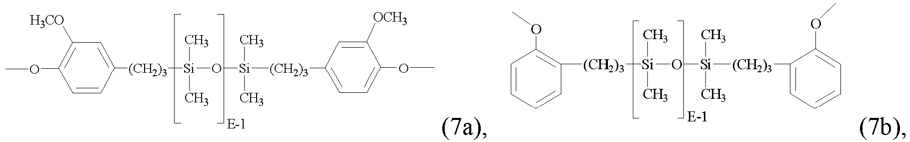 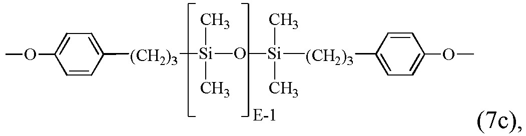 or a combination thereof, wherein E has an average value of 10 to 100, preferably 20 to 60, more preferably 30 to 50, or 40 to 50.

Blocks of formula (7) can be derived from the corresponding dihydroxy polydiorganosiloxanes by known methods. The polycarbonate-siloxane can be manufactured by introducing phosgene under interfacial reaction conditions into a mixture of bisphenol and an end capped polydimethylsiloxane (PDMS). Other known methods can also be used.

In an aspect, the poly(carbonate-siloxane) comprises carbonate units derived from bisphenol A, and repeating siloxane units (5a), (5b), (7a), (7b), (7c), or a combination thereof (preferably of formula 7a), wherein E has an average value of 10 to 100, preferably 20 to 80, or 30 to 70, more preferably 30 to 50 or 40 to 50.

The polycarbonate-siloxane copolymer can have a siloxane content of 30 to 70 weight percent, based on the total weight of the second polycarbonate-siloxane copolymer. Within this range, the polycarbonate-siloxane copolymer can have a siloxane content of 35 to 65 weight percent, or 35 to 60 weight percent, or 30 to 50 weight percent, or 35 to 55 weight percent, or 35 to 45 weight percent. As used herein, "siloxane content" of a poly(carbonate-siloxane) refers to the content of siloxane units based on the total weight of the polycarbonate-siloxane copolymer.

The polycarbonate-siloxane copolymer can have a weight average molecular weight of 21,000 to 50,000 g/mol. Within this range, the weight average molecular weight can be 25,000 to 45,000 g/mol, or 30,000 to 45,000 g/mol, or 32,000 to 43,000 g/mol, or 34,000 to 41,000 g/mol, or 35,000 to 40,000 g/mol. The weight average molecular weight can be measured by gel permeation chromatography using a crosslinked styrene-divinyl benzene column, at a sample concentration of 1 milligram per milliliter, and as calibrated with bisphenol A polycarbonate standards.

The composition comprises less than 5 weight percent or less than or equal to 1 weight percent, or less than or equal to 0.1 weight percent of a polycarbonate-siloxane having a siloxane content of less than 30 weight percent, or a siloxane content of less than 10 weight percent. Preferably a polycarbonate-siloxane having a siloxane content of less than 30 weight percent or a siloxane content of less than 10 weight percent is excluded from the composition.

The polycarbonate-siloxane copolymer can be present in the composition in an amount to provide a total siloxane content of 3 to 14 weight percent, or 3 to 12 weight percent, or 3 to 10 weight percent, or 3 to 8 weight percent, or 3 to 6 weight percent or 3 to 4 weight percent, or 3 to 7.5 weight percent, or 7.5 to 14 weight percent, each based on the total weight of the polycarbonate composition.

The polycarbonate-siloxane copolymer can be present in the composition in an amount of 10 to 20 weight percent, based on the total weight of the composition. Within this range, the polycarbonate-siloxane copolymer can be present in an amount of, for example, greater than 12 to 20 weight percent, or 12 to 18 weight percent, or 13 to 17 weight percent, each based on the total weight of the composition.

In an aspect, one or both of the bisphenol A homopolycarbonate and the polycarbonate-siloxane copolymer can be derived from post-consumer recycled or post-industrial recycled materials. In an aspect, one or both of the bisphenol A homopolycarbonate and the polycarbonate-siloxane copolymer can be produced from at least one monomer derived from bio-based or plastic waste feedstock.

The polycarbonate composition can optionally further comprise an additive composition comprising one or more additives ordinarily incorporated into polymer compositions of this type, provided that the one or more additives are selected so as not to significantly adversely affect the desired properties of the polycarbonate composition, in particular impact, chemical resistance, and flame retardance. Additives can include fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, flame retardants, and anti-drip agents. A combination of additives can be used, for example a combination of a heat stabilizer, mold release agent, and ultraviolet light stabilizer. In general, the additives are used in the amounts generally known to be effective. For example, the total amount of the additives (other than any impact modifier, filler, or reinforcing agents) can be 0.01 to 5 weight percent, based on the total weight of the polycarbonate composition. In an aspect, the polycarbonate composition comprises no more than 5 weight percent based on the weight of the composition of a processing aid, a heat stabilizer, an antioxidant, an ultraviolet light absorber, a colorant, or a combination thereof.

In an aspect, the composition can optionally further comprise a flame retardant. Useful flame retardants can include organic compounds that include phosphorus, bromine, or chlorine. Non-brominated and non-chlorinated phosphorus-containing flame retardants can be preferred in certain applications for regulatory reasons, for example organic phosphates and organic compounds containing phosphorus-nitrogen bonds.

Flame retardant aromatic phosphates include triphenyl phosphate, tricresyl phosphate, isopropylated triphenyl phosphate, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, and 2-ethylhexyl diphenyl phosphate. Di- or polyfunctional aromatic phosphorus-containing compounds are also useful, for example resorcinol tetraphenyl diphosphate (RDP), the bis(diphenyl) phosphate of hydroquinone and the bis(diphenyl) phosphate of bisphenol A, respectively, and their oligomeric and polymeric counterparts.

Flame retardant compounds containing phosphorus-nitrogen bonds include phosphazenes, phosphonitrilic chloride, phosphorus ester amides, phosphoric acid amides, phosphonic acid amides, phosphinic acid amides, and tris(aziridinyl) phosphine oxide. These flame-retardant additives are commercially available.

Halogenated materials can also be used as flame retardants, for example bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; and 2,2-bis-(3,5-dichloro-4-hydroxyphenyl)-propane 2,2 bis-(3-bromo-4-hydroxyphenyl)-propane. Other halogenated materials include 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, as well as oligomeric and polymeric halogenated aromatic compounds, such as a copolycarbonate of bisphenol A and tetrabromobisphenol A and a carbonate precursor, e.g., phosgene. Metal synergists, e.g., antimony oxide, can also be used with the flame retardant.

Alternatively, the thermoplastic composition can be essentially free of chlorine and bromine. "Essentially free of chlorine and bromine" is defined as having a bromine or chlorine content of less than or equal to 100 parts per million by weight (ppm), less than or equal to 75 ppm, or less than or equal to 50 ppm, based on the total parts by weight of the composition.

Inorganic flame retardants can also be used, for example salts of C₁₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, or Na₃AlF₆.

When present, the flame retardant can be included in the composition in an amount of 0.01 to 10 weight percent. Within this range, the flame retardant can be present in an amount of 0.1 to 10 weight percent, or 1 to 10 weight percent, or 1 to 8 weight percent, or 2 to 6 weight percent, or 3 to 5 weight percent, each based on the total weight of the composition. In an aspect, when the flame retardant comprises an inorganic flame retardant, the flame retardant can be present in an amount of 0.05 to 1 weight percent.

Heat stabilizer additives can include organophosphites (e.g., triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or a combination thereof. The heat stabilizer can be tris(2,4-di-t-butylphenyl) phosphate available as IRGAPHOS 168. Heat stabilizers are generally used in amounts of 0.01 to 5 wt%, based on the total weight of polymer in the composition.

Light stabilizers or ultraviolet light (UV) absorbing additives, also referred to as UV stabilizers, can also be used. Light stabilizer additives include benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or the like, or a combination thereof.

UV absorbing additives include hydroxybenzophenones; hydroxybenzotriazoles; hydroxybenzotriazines; cyanoacrylates; oxanilides; benzoxazinones; aryl salicylates; monoesters of diphenols such as resorcinol monobenzoate; 2-(2H-benzotriazol-2-yl)-4-(1,1,3,3-tetramethylbutyl)-phenol (CYASORB 5411); 2-hydroxy-4-n-octyloxybenzophenone (CYASORB 531); 2-[4,6-bis(2,4-dimethylphenyl)-1,3,5-triazin-2-yl]-5-(octyloxy)-phenol (CYASORB 1164); 2,2'-(1,4- phenylene)bis(4H-3,1-benzoxazin-4-one) (CYASORB UV-3638); poly[(6-morphilino-s-triazine-2,4-diyl)[2,2,6,6-tetramethyl-4-piperidyl) imino]-hexamethylene[(2,2,6,6-tetramethyl-4-piperidyl)imino], 2-hydroxy-4-octyloxybenzophenone (UVINUL^{™}3008), 6-tert-butyl-2-(5-chloro-2H-benzotriazole-2-yl)-4-methylphenyl (UVINUL^{™}3026), 2,4-di-tert-butyl-6-(5-chloro-2H-benzotriazole-2-yl)-phenol (UVINUL^{™}3027), 2-(2H-benzotriazole-2-yl)-4,6-di-tert-pentylphenol (UVINUL3028), 2-(2H-benzotriazole-2-yl)-4-(1,1,3,3-tetramethylbutyl)-phenol (UVINUL3029), 1,3-bis[(2'cyano-3',3'-diphenylacryloyl)oxy]-2,2-bis-{[(2'-cyano-3',3'-diphenylacryloyl)oxy]methyl}-propane (UVINUL3030), 2-(2H-benzotriazole-2-yl)-4-methylphenol (UVINUL3033), 2-(2H-benzotriazole-2-yl)-4,6-bis(1-methyl-1-phenyethyl)phenol (UVINUL3034), ethyl-2-cyano-3,3-diphenylacrylate (UVINUL3035), (2-ethylhexyl)-2-cyano-3,3-diphenylacrylate (UVINUL3039), N,N'-bisformyl-N,N'-bis(2,2,6,6-tetramethyl-4-piperidinyl)hexamethylendiamine (UVINUL4050H), bis-(2,2,6,6-tetramethyl-4-piperidyl)-sebacate (UVINUL4077H), bis-(1,2,2,6,6-pentamethyl-4-piperdiyl)-sebacate + methyl-(1,2,2,6,6-pentamethyl-4-piperidyl)-sebacate (UVINUL4092H) 1,3-bis[(2-cyano-3,3-diphenylacryloyl)oxy]-2,2-bis[[(2-cyano-3, 3-diphenylacryloyl)oxy]methyl]propane (UVINUL 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; TINUVIN 234; nano-size inorganic materials such as titanium oxide, cerium oxide, and zinc oxide, all with particle size less than or equal to 100 nanometers; or the like, or a combination thereof. UV absorbers can be used in amounts of 0.01 to 1 part by weight, based on 100 parts by weight of polycarbonate and impact modifier. UV absorbers that can be particularly useful with the polycarbonate compositions disclosed herein include 2-(2H-benzotriazol-2-yl)-4-(1,1,3,3-tetramethylbutyl)-phenol (e.g., CYASORB 5411 commercially available from Cytec Industries, Inc., Woodland Park, New Jersey) and 2,2'-(1,4-phenylene)bis(4H-3,1-benzoxazin-4-one) (e.g., CYASORB UV-3638, commercially available from Cytec Industries, Inc., Woodland Park, New Jersey), or a combination thereof. The UV stabilizers can be present in an amount of 0.01 to 1 wt%, preferably, 0.1 to 0.5 wt%, and more preferably, 0.15 to 0.4 wt%, based upon the total weight of the polycarbonate composition.

Plasticizers, lubricants, or mold release agents can also be used. There is considerable overlap among these types of materials, which include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol A; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination thereof, e.g., methyl stearate and polyethylene-polypropylene glycol copolymer in a suitable solvent; waxes such as beeswax, montan wax, paraffin wax, or the like.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. An TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Anti-drip agents can be used in amounts of 0.1 to 5 weight percent, or 0.1 to 2 weight percent, based on the total weight of the composition.

In an aspect, the polycarbonate can comprise a colorant composition. Suitable colorants can include, but are not limited to, those known under their Color Index numbers as solvent green 3, solvent green 28, solvent red 52, solvent red 111, solvent red 135, solvent red 169, solvent red 179, solvent red 207, disperse red 22, vat red 41, solvent orange 60, solvent orange 63, solvent violet 13, solvent violet 14, solvent violet 50, amino ketone black, solvent black 7, nigrosine dyes, disperse blue 73, solvent blue 97, solvent blue 101, solvent blue 104, solvent blue 138, disperse yellow 160, solvent yellow 84, solvent yellow 93, solvent yellow 98, solvent yellow 163, solvent yellow 160: 1, and mixtures comprising at least one of the foregoing colorants.

Colorants can be employed in amounts and combinations sufficient to render the molded article dark and opaque, and more specifically to provide the lightness values described below. The specific amount of a colorant employed can depend on, among other factors, its solubility and extinction coefficient in the polycarbonate composition, and whether it is being employed in combination with one or more additional colorants. Suitable amounts and combinations can readily be determined by those of ordinary skill in the art guided by the present disclosure. Typical colorant amounts can be, for example, 0.1 to 1 weight percent, based on the total weight of the composition, for example 0.5 to 1 weight percent, based on the total weight of the composition.

In an aspect, when present, the colorant composition can provide the polycarbonate composition having a black color.

The polycarbonate composition can optionally exclude other components not specifically described herein. For example, the polycarbonate composition can exclude thermoplastic polymers other than the bisphenol A homopolycarbonate and the polycarbonate-siloxane copolymers. For example the composition can minimize or exclude polyesters (e.g., a polyester can be present in an amount of 1 weight percent or less, preferably wherein a polyester is excluded from the composition). The composition can optionally minimize or exclude a polycarbonate other than the bisphenol A homopolycarbonate and the polycarbonate-siloxane copolymer, for example a polyester-carbonate or a bisphenol A copolycarbonate different from the polycarbonate-siloxane copolymer. The polycarbonate composition can optionally minimize or exclude impact modifiers, for example silicone-based impact modifiers different from the poly(carbonate-siloxane) copolymer, methyl methacrylate-butadiene-styrene copolymers, acrylonitrile-butadiene, styrene copolymers, and the like, or a combination thereof. The composition can minimize or exclude halogenated flame retardants, for example brominated flame retardants, including brominated polycarbonate (e.g., a polycarbonate containing brominated carbonate includes units derived from 2,2',6,6'-tetrabromo-4,4'-isopropylidenediphenol (TBBPA) and carbonate units derived from at least one dihydroxy aromatic compound that is not TBBPA), brominated epoxies, and the like or combinations thereof. The composition can optionally exclude a phosphorous-containing flame retardant.

The composition of the present disclose can advantageously exhibit one or more desirable properties. For example, it was surprisingly found that the composition can exhibit a low melt volume rate (MVR). For example, the polycarbonate composition can have a melt volume rate of less than or equal to 10 cm³/10 minutes, as determined according to ISO1133 under a load of 2.16 kg at 300 °C with a dwell time of 300 seconds. The polycarbonate composition can further exhibit a low melt viscosity (MV) indicating the material is well processable despite the relatively low MVR. For example, in an aspect, the polycarbonate composition can have a melt viscosity of less than 200 Pa-s, as determined according to ISO11443 at a shear rate of 5000 s⁻¹.

It was further unexpectedly discovered that using a high siloxane content polycarbonate-siloxane copolymer in combination with a bisphenol A homopolycarbonate having a particular molecular weight, good chemical resistance and aesthetic properties could also be obtained.

The composition can have good chemical resistance. In an aspect, a molded sample of the polycarbonate composition can have a tensile strain at break of at least 50% of the tensile strain at break of a non-exposed reference tested at the same temperature after exposure of an ISO tensile bar for 72 hours to insect repellant or sunscreen at a temperature of 23°C under 1% strain.

The polycarbonate composition can further exhibit good black color. For example, the polycarbonate composition can have an L* value of less than or equal to 10, or less than or equal to 8, or less than or equal to 7, or less than or equal to 6, as measured by the CIE Lab method with a 10 degree observer, D65 illuminant, specular component excluded, and measured in reflectance mode, and using a sample having a thickness of 3.2 millimeters.

In an aspect, the composition can also exhibit good flame retardancy. In an aspect of measuring flame retardance, the UL94 standard utilizes a rating of V0, V1, V2 or HB, wherein a rating of V0 is better than V1 or V2 and is required for many applications at the actual part thickness. Using this standard, the polycarbonate compositions are formed into a molded article having a given thickness. The thinner the article, the more difficult it is to achieve a rating of V0 or V1. In an aspect, a molded sample of the polycarbonate composition is capable of achieving a UL-94 V0 or V1 rating at a thickness of 1.5 millimeters or less, preferably a UL-94 rating of V0 or V1 at a thickness of less than or equal to 1.2 millimeters.

The polycarbonate composition according to the present disclosure can comprise 80 to 90 weight percent of a bisphenol A homopolycarbonate having a weight average molecular weight of 28,000 or more, determined by gel permeation chromatography relative to linear bisphenol A polycarbonate standards; and 10 to 20 weight percent of a polycarbonate-siloxane copolymer having a siloxane content of 30 to 70 weight percent, based on the total weight of the polycarbonate-siloxane copolymer; wherein the composition comprises less than 5 weight percent of a polycarbonate-siloxane copolymer having a siloxane content of less than 30 weight percent. The polycarbonate composition can have a melt volume rate of less than or equal to 10 cm³/10 minutes, as determined according to ISO1133 under a load of 2.16 kg at 300 °C with a dwell time of 300 seconds. The bisphenol A homopolycarbonate can have a weight average molecular weight of 29,000 to 45,000 grams per mole, as determined by gel permeation chromatography relative to linear bisphenol A polycarbonate standards. The bisphenol A homopolycarbonate can comprise a first linear bisphenol A homopolycarbonate having a weight average molecular weight of 32,000 to 38,000 grams per mole, preferably 34,000 to 36,000 grams per mole, as determined by gel permeation chromatography relative to linear bisphenol A polycarbonate standards; or a second linear bisphenol A homopolycarbonate having a weight average molecular weight of 29,000 to 32,000 grams per mole, preferably 30,000 to 31,000 grams per mole, as determined by gel permeation chromatography relative to linear bisphenol A polycarbonate standards; or a combination thereof. The polycarbonate composition can optionally further comprise a bisphenol A homopolycarbonate having a molecular weight of 18,000 to 24,000 g/mol, preferably 20,000 to 22,000 g/mol, as determined by gel permeation chromatography relative to linear bisphenol A polycarbonate standards, provided that a weight ratio of bisphenol A homopolycarbonate having a weight average molecular weight of 28,000 g/mol or more to the bisphenol A homopolycarbonate having a molecular weight of 18,000 to 24,000 g/mol is greater than 1:1, preferably greater than 2:1. The polycarbonate-siloxane copolymer can have a siloxane content of 35 to 65 weight percent, based on the total weight of the polycarbonate-siloxane copolymer. The polycarbonate-siloxane copolymer can comprise bisphenol A carbonate repeating units and poly(dimethyl siloxane) repeating units. The polycarbonate-siloxane copolymer can have a weight average molecular weight of 21,000 to 50,000 g/mol, or 25,000 to 45,000 g/mol, or 30,000 to 45,000 g/mol, or 32,000 to 43,000 g/mol, or 35,000 to 40,000 g/mol, as determined by gel permeation chromatography using a crosslinked styrene-divinyl benzene column, at a sample concentration of 1 milligram per milliliter, and as calibrated with bisphenol A polycarbonate standards. The composition can be free of a polycarbonate-siloxane copolymer having a siloxane content of less than 30 weight percent. The polycarbonate composition can further comprise 0.1 to 10 weight percent, based on the total weight of the polycarbonate composition, of an additive composition. A molded sample of the composition exhibits one or more of: a UL-94 rating of V0 at a thickness of 1.5 millimeters or

less; preferably a UL-94 rating of V0 at a thickness of less than or equal to 1.2 millimeters; an L* value of less than or equal to 10 as measured by the CIE Lab method, 10 degree observer, D65 illuminant, specular component excluded, measured in reflectance mode; and a tensile strain at break that is at least 50% of the tensile strain at break of a non-exposed reference sample after exposure to sunscreen or insect repellant.

The polycarbonate composition can be manufactured by various methods known in the art. For example, powdered polycarbonate homopolymer, poly(carbonate-siloxane) and other optional components are first blended, optionally with any fillers, in a high-speed mixer or by hand mixing. The blend is then fed into the throat of a twin-screw extruder via a hopper. Alternatively, at least one of the components can be incorporated into the composition by feeding it directly into the extruder at the throat and/or downstream through a side stuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

Shaped, formed, casted, or molded articles comprising the polycarbonate composition are also provided. The polycarbonate composition can be molded into useful shaped articles by a variety of methods, such as injection molding, extrusion, rotational molding, blow molding, and thermoforming. The article can be a molded article, a thermoformed article, an extruded film, an extruded sheet, a honeycomb structure, one or more layers of a multi-layer article, a substrate for a coated article, and a substrate for a metallized article. Exemplary articles can include computer and business machine housings such as housings for monitors, handheld electronic device housings such as housings for cell phones, electrical connectors, and components of lighting fixtures, ornaments, home appliances, roofs, greenhouses, sunrooms, swimming pool enclosures, electronic device casings and signs and the like. In addition, the polycarbonate compositions can be used for such applications as automotive panel and trim. Examples of suitable articles are exemplified by but are not limited to aircraft, automotive, truck, military vehicle (including automotive, aircraft, and water-borne vehicles), scooter, and motorcycle exterior and interior components, including panels, quarter panels, rocker panels, trim, fenders, doors, deck-lids, trunk lids, hoods, bonnets, roofs, bumpers, fascia, grilles, mirror housings, pillar appliqués, cladding, body side moldings, wheel covers, hubcaps, door handles, spoilers, window frames, headlamp bezels, headlamps, tail lamps, tail lamp housings, tail lamp bezels, license plate enclosures, roof racks, and running boards; enclosures, housings, panels, and parts for outdoor vehicles and devices; enclosures for electrical and telecommunication devices; outdoor furniture; aircraft components; boats and marine equipment, including trim, enclosures, and housings; outboard motor housings; depth finder housings; personal water-craft; jet-skis; pools; spas; hot tubs; steps; step coverings; building and construction applications such as glazing, roofs, windows, floors, decorative window furnishings or treatments; treated glass covers for pictures, paintings, posters, and like display items; wall panels, and doors; counter tops; protected graphics; outdoor and indoor signs; enclosures, housings, panels, and parts for automatic teller machines (ATM); computer; desk-top computer; portable computer; lap-top computer; hand held computer housings; monitor; printer; keyboards; FAX machine; copier; telephone; phone bezels; mobile phone; radio sender; radio receiver; enclosures, housings, panels, and parts for lawn and garden tractors, lawn mowers, and tools, including lawn and garden tools; window and door trim; sports equipment and toys; enclosures, housings, panels, and parts for snowmobiles; recreational vehicle panels and components; playground equipment; shoe laces; articles made from plastic-wood combinations; golf course markers; utility pit covers; light fixtures; lighting appliances; network interface device housings; transformer housings; air conditioner housings; cladding or seating for public transportation; cladding or seating for trains, subways, or buses; meter housings; antenna housings; cladding for satellite dishes; coated helmets and personal protective equipment; coated synthetic or natural textiles; coated painted articles; coated dyed articles; coated fluorescent articles; coated foam articles; medical device housings; battery housings, including for electric vehicles, electric bikes, and home and industrial electronics; components of charging equipment for an electric vehicle, including wall box housings, connectors, and the like; wireless charging device components; electronic device protection covers; kitchen appliance components; and like applications.

The composition of the present disclosure can be particularly useful in articles for consumer electronic applications. For example, the articles can be a component of a consumer electronic device such as a gaming console, a gaming controller, a portable gaming device, a cellular telephone, a television, a personal computer, a tablet computer, a laptop computer, a personal digital assistant, a portable media player, a digital camera, a portable music player, an appliance, a power tool, a robot, a toy, a greeting card, a home entertainment system, a loudspeaker, or a soundbar. In an aspect, the articles can be an electronic housing for an adapter, a cell phone, a smart phone, a GPS device, a laptop computer, a tablet computer, an e-reader, a copier, or a solar apparatus.

In an aspect, the article can be a laser-welded article. For example, parts or articles as described above can be assembled into an article by laser welding. For example, a process for welding a first article comprising the above-described composition to a second thermoplastic article can include physically contacting at least a portion of a surface of the first article with at least a portion of a surface of the second thermoplastic article, applying laser radiation to the first article, wherein the radiation passes through the first article and the radiation is absorbed by the second article and sufficient heat is generated to weld the first article to the second article. The second thermoplastic article can comprise a wide variety of thermoplastic polymer compositions that have been rendered laser absorbing by means known to those of skill in the art including the use of additives and/or colorants such as but not limited to carbon black. Exemplary polymer compositions can include but are not limited to, olefinic polymers, including polyethylene and its copolymers and terpolymers, polybutylene and its copolymers and terpolymers, polypropylene and its copolymers and terpolymers; alpha-olefin polymers, including linear or substantially linear interpolymers of ethylene and at least one alpha-olefin and atactic poly(alpha-olefins); rubbery block copolymers; polyamides; polyimides; polyesters such as poly(arylates), poly(ethylene terephthalate) and poly(butylene terephthalate); vinylic polymers such as polyvinyl chloride and polyvinyl esters such as polyvinyl acetate; acrylic homopolymers, copolymers and terpolymers; epoxies; polycarbonates, polyester-polycarbonates; polystyrene; poly(arylene ethers), including poly(phenylene ether); polyurethanes; phenoxy resins; polysulfones; polyethers; acetal resins; polyoxyethylenes; and combinations thereof. More particularly, the polymers are selected from the group consisting of polyethylene, ethylene copolymers, polypropylene, propylene copolymers, polyesters, polycarbonates, polyester-polycarbonates, polyamides, poly(arylene ether)s, and combinations thereof. In a specific embodiment, the second article comprises an olefinic polymer, polyamide, polyimide, polystyrene, polyarylene ether, polyurethane, phenoxy resin, polysulfone, polyether, acetal resin, polyester, vinylic polymer, acrylic, epoxy, polycarbonate, polyester-polycarbonate, styrene-acrylonitrile copolymers, or a combinations thereof. More specifically, the second article can comprise a polycarbonate homopolymer or copolymer, polyester homopolymer or copolymer, e.g., a poly(carbonate-ester) and combinations thereof. Also disclosed are laser-welded articles comprising the thermoplastic composition of the present disclosure in a first component laser-welded to a second component comprising a second thermoplastic composition as described above.

This disclosure is further illustrated by the following examples, which are nonlimiting.

### EXAMPLES

Materials used for the following examples are shown in Table 1.

**Table 1**

| Component | Description | Supplier |
|---|---|---|
| PC-1 | Linear bisphenol A polycarbonate, CAS Reg. No, 25971-63-5, having a molecular weight (Mw) of 34,000-36,000 grams per mole, as determined by gel permeation chromatography relative to linear bisphenol A polycarbonate standards, produced via interfacial polymerization and end-capped with phenol | SABIC |
| PC-2 | Linear bisphenol A polycarbonate, CAS Reg. No, 25971-63-5, having a molecular weight (Mw) of 30,000 - 31,000 grams per mole, as determined by gel permeation chromatography relative to linear bisphenol A polycarbonate standards, produced by interfacial polymerization and endcapped with phenol | SABIC |
| PC-3 | Linear bisphenol A polycarbonate having a Mw of 20,000-22,000 grams per mole, as determined by gel permeation chromatography relative to linear bisphenol A polycarbonate standards, produced by interfacial polymerization and endcapped with p-cumylphenol | SABIC |
| PC-Si-1 | Polycarbonate-siloxane copolymer having a siloxane content of 40 weight percent, average PDMS block length of 45 units, having a Mw of 37,000 to 38,000 grams per mole as determined by gel permeation chromatography relative to linear bisphenol A polycarbonate standards, produced by interfacial polymerization and endcapped with p-cumylphenol | SABIC |
| PC-Si-2 | Polycarbonate-siloxane copolymer having a siloxane content of 20 weight percent, average PDMS block length of 45 units, having a Mw of 28,000 to 32,000 grams per mole as determined by gel permeation chromatography relative to linear bisphenol A polycarbonate standards, produced by interfacial polymerization and endcapped with p-cumylphenol | SABIC |
| TBPP | Tris(2,4-di-tert-butylphenyl) phosphite, CAS Reg. No. 31570-04-4; available as IRGAFOS 168 | BASF |
| BZT | Phenol, 2-(2H-benzotriazol-2-yl)-4,6-bis(1-methyl-1-phenylethyl), CAS Reg. No. 70321-86-7; available as TINUVIN 234 | BASF |
| PETS | Pentaerythritol tetrastearate | FACI |
| TSAN | Polyacrylonitrile-encapsulated polytetrafluoroethylene having 50 weight percent polytetrafluoroethylene; obtained as CYCOLAC INP449 Resin | SABIC |
| Green Dye | Solvent Green 3, obtained as MACROLEX Green 5B | Lanxess |
| Red Dye | Solvent Red 135, obtained as MACROLEX Red EG | Lanxess |
| Yellow Dye | Solvent Yellow 163, obtained as FARBTEX YELLOW GHS | Farbtex |
| Yellow Pigment | Pigment yellow 138, CAS Reg. No. 30125-47-4 | BASF |
| KSS | Potassium diphenylsulfonesulfonate, CAS Reg. No. 63316-43-8 | Arichem |
| TiO₂ | Titanium dioxide | |

Components of the compositions were compounded and extruded. Molded parts for physical testing were prepared by injection molding. Test methods are described below in Table 2.

**Table 2**

| Test and Condition | Unit | Specimen | Standard |
|---|---|---|---|
| Melt Volume Rate (MVR), 300°C, 300 s, various load | cm³/10min | Pellet, pre-dried | ISO1133 |
| Izod Impact, notched, various temp | J/m | 3.2 mm bar | ASTM D 256 |
| Heat Deflection Temperature (HDT), 1.82 MPa | °C | 3.2 mm flexural bar | ASTM D 648 |
| Melt viscosity (MV), 300°C | Pa-s | Pellet, pre-dried | ISO11443 |
| Tensile Modulus, 5 mm/min | MPa | Type I bar | ASTM D 638 |
| Tensile Stress at yield, Type I, 50 mm/min | MPa | Type I bar | ASTM D 638 |
| Tensile stress at break, Type I, 50 mm/min | Mpa | Type I bar | ASTM D 638 |
| Tensile Strain at yield, Type I, 50 mm/min | % | Type I bar | ASTM D 638 |
| Tensile Strain at break, Type I, 50 mm/min | % | Type I bar | ASTM D 638 |
| FR at 23 °C/50 % RH for 48 hrs | / | 127 x 12.7 x Thickness | UL 94 V test |
| Color: L*, a*, b*; D65 illuminant; 10° observer; specular component excluded; measured in reflection mode | / | 3.2 millimeters thickness | ASTM E 308-08 |

Flammability tests were performed following the procedure of Underwriter's Laboratory Bulletin 94 entitled "Tests for Flammability of Plastic Materials for Parts in Devices and Appliances" (ISBN 0-7629-0082-2), Fifth Edition, Dated October 29, 1996, incorporating revisions through and including December 12, 2003. Several ratings can be applied based on the rate of burning, time to extinguish, ability to resist dripping, and whether or not drips are burning. According to this procedure, materials can be classified as UL94 HB, V0, VI, V2, 5VA, or 5VB. The test specimens were aged at 23°C, 50% RH for more than 2 days or 70°C for 168 hours before testing. Specifically, in the UL 94 20 mm Vertical Burning Flame Test, a set of five flame bars was tested. For each bar, a flame was applied to the bar then removed, and the time required for the bar to self-extinguish (first afterflame time, t1) was noted. The flame was then reapplied and removed, and the time required for the bar to self-extinguish (second afterflame time, t2) and the post-flame glowing time (afterglow time, t3) were noted. To achieve a rating of V-0, the afterflame times t1 and t2 for each individual specimen must have been less than or equal to 10 seconds; and the total afterflame time for all five specimens (t1 plus t2 for all five specimens) must have been less than or equal to 50 seconds; and the second afterflame time plus the afterglow time for each individual specimen (t2 + t3) must have been less than or equal to 30 seconds; and no specimen can have flamed or glowed up to the holding clamp; and the cotton indicator cannot have been ignited by flaming particles or drops. To achieve a rating of V-1, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; and the cotton indicator cannot have been ignited by flaming particles or drops. To achieve a rating of V-2, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; but the cotton indicator can have been ignited by flaming particles or drops.

Environmental stress cracking resistance (ESCR) describes the accelerated failure of polymeric materials, as a combined effect of environment, temperature, and stress. The failure mainly depends on the characteristics of the material, chemical, exposure condition, and the magnitude of the stress. The ISO tensile bars were clamped to a semicircular jig to impart a constant strain of 1.0%. The bars were than exposed to the chemical for pre-defined time period at 23°C. After cleaning, tensile properties were measured in accordance with ASTM D638 at 50 mm/min at room temperature on standard ASTM tensile bars.

### Examples 1-3

Table 5 shows the compositions and properties for the compositions according to Examples 1-3. As can be seen in Table 5, the color (i.e., the L*, a*, and b*) values were unexpectedly improved as the molecular weight of the bisphenol A homopolycarbonate component increases. The amount of each component is expressed in weight percent based on the total weight of the composition.

**Table 5**

| Component | Unit | 1 | 2 | 3* |
|---|---|---|---|---|
| PC-1 | wt% | 83.45 | | |
| PC-2 | wt% | | 83.45 | |
| PC-3 | wt% | | | 83.45 |
| PC-Si-1 | wt% | 15 | 15 | 15 |
| TBPP | wt% | 0.09 | 0.09 | 0.09 |
| BZT | wt% | 0.3 | 0.3 | 0.3 |
| PETS | wt% | 0.1 | 0.1 | 0.1 |
| TSAN | wt% | 0.5 | 0.5 | 0.5 |
| Green Dye | wt% | 0.13 | 0.13 | 0.13 |
| Red Dye | wt% | 0.13 | 0.13 | 0.13 |
| KSS | wt% | 0.3 | 0.3 | 0.3 |
| Properties | | | | |
| UL94 Rating, 1.5 mm | | V0 | V0 | V0 |
| UL94 Rating, 1.2 mm | | V0 | V0 | V0 |
| MVR, 2.16 kg, 300C | cm³/10min | 3.4 | 6.4 | 21.5 |
| HDT, 1.8 MPa | °C | 123 | 123 | 118 |
| HDT, 0.45 MPa | °C | 138 | 136 | 133 |
| MV, 100 s⁻¹ | Pa-s | 1293 | 775 | 258 |
| MV, 200 s⁻¹ | Pa-s | 969 | 618 | 248 |
| MV, 500 s⁻¹ | Pa-s | 671 | 396 | 217 |
| MV, 1000 s⁻¹ | Pa-s | 473 | 269 | 180 |
| MV, 2000 s⁻¹ | Pa-s | 382 | 260 | 151 |
| MV, 3500 s⁻¹ | Pa-s | 263 | 189 | 112 |
| MV, 5000 s⁻¹ | Pa-s | 195 | 156 | 89 |
| MV, 7000 s⁻¹ | Pa-s | 149 | | 73 |
| NII, 23°C | kJ/m² | 78 | 79 | 54 |
| NII, -30°C | kJ/m² | 75 | 61 | 45 |
| Mod. of elasticity | MPa | 2113 | 2117 | 1986 |
| Tens. strength @ yld | MPa | 56 | 56 | 51 |
| Tens. strength @ brk | MPa | 59 | 68 | 59 |
| Tens. elong. @ yld | % | 6 | 6 | 5 |
| Nominal strain @ brk | % | 82 | 120 | 110 |
| L* | | 14.4 | 18.1 | 27.7 |
| a* | | -0.2 | -0.9 | -1.7 |
| b* | | -12.2 | -12.9 | -9.1 |
| 5 days sunscreen exposure - run 1 | Strain@brk (%) | 78 | 98 | 109 |
| 5 days sunscreen exposure - run 2 | Strain@brk (%) | 80 | 67 | 94 |
| 5 days sunscreen exposure - run 3 | Strain@brk (%) | 79 | 107 | 81 |
| 5 days sunscreen exposure - run 4 | Strain@brk (%) | 71 | 105 | Break |
| 5 days sunscreen exposure - run 5 | Strain@brk (%) | 78 | 17 | Break |
| | | | | |
| 2 days insect repellant exposure - run 1 | Strain@brk (%) | 80 | 102 | 107 |
| 2 days insect repellant exposure - run 2 | Strain@brk (%) | 79 | 101 | 95 |
| 2 days insect repellant exposure - run 3 | Strain@brk (%) | 79 | 99 | 84 |
| 2 days insect repellant exposure - run 4 | Strain@brk (%) | 74 | 96 | 79 |
| 2 days insect repellant exposure - run 5 | Strain@brk (%) | 74 | 80 | 15 |
| 2 days insect repellant exposure - run 6 | Strain@brk (%) | 73 | 62 | 3.1 |
| 2 days insect repellant exposure - run 7 | Strain@brk (%) | 70 | | 3.1 |
| 2 days insect repellant exposure - run 8 | Strain@brk (%) | 60 | 41 | 2.7 |
| 2 days insect repellant exposure - run 9 | Strain@brk (%) | 5 | 35 | 2.7 |
| 2 days insect repellant exposure - run 10 | Strain@brk (%) | Break | 31 | 2.4 |

| | | | | |
|---|---|---|---|---|
| * indicates a comparative example | | | | |

Table 5 shows that the use of the high molecular weight bisphenol A homopolycarbonate can further provide favorable chemical resistance properties. When PC-3 is used as the main polycarbonate component (Comparative Example 3), multiple fails were observed at 1% strain after exposing the sample to an insect repellant spray for two days. Similarly, exposing the compositions to a sunscreen spray also resulted in early failure in 2 out of 5 samples at 1% strain after exposing the sample for five days. In contrast, homopolycarbonate having higher molecular weights provides improved chemical resistance.

### Examples 5-8

Table 7 shows the compositions and properties for the compositions according to Examples 5-8. As can be seen in Table 6, the color (i.e., the L*, a*, and b*) values were unexpectedly improved as the molecular weight of the bisphenol A homopolycarbonate component increases when a combination of high molecular weight bisphenol A homopolycarbonates were used. Interestingly, the color of the composition was observed to improve even when high amounts of dyes were included, (e.g., comparing example 2 with example 4, with example 4 exhibiting improved color due to changing the colorants and loading). Notably, the L* value could be decreased to below 10, a "deep black" color, which is typically difficult to achieve. From Table 6, it can be seen that using a polycarbonate component having a molecular weight of, for example, 26,000 g/mol or greater, or 27,000 g/mol or greater, or 28,000 g/mol or greater, can provide a desirable L* value for the polycarbonate composition. The amount of each component is expressed in weight percent based on the total weight of the composition.

**Table 6**

| Component | Unit | 4 | 5 | 6* | 7* |
|---|---|---|---|---|---|
| PC-2 | wt% | 83.11 | 62.36 | 41.61 | 20.86 |
| PC-3 | wt% | | 20.75 | 41.5 | 62.25 |
| PC-Si | wt% | 15 | 15 | 15 | 15 |
| TBPP | wt% | 0.09 | 0.09 | 0.09 | 0.09 |
| BZT | wt% | 0.3 | 0.3 | 0.3 | 0.3 |
| PETS | wt% | 0.1 | 0.1 | 0.1 | 0.1 |
| TSAN | wt% | 0.2 | 0.2 | 0.2 | 0.2 |
| SG3 | wt% | 0.3 | 0.3 | 0.3 | 0.3 |
| SY163 | wt% | 0.3 | 0.3 | 0.3 | 0.3 |
| SR135 | wt% | 0.3 | 0.3 | 0.3 | 0.3 |
| KSS | wt% | 0.3 | 0.3 | 0.3 | 0.3 |
| Properties | | | | | |
| MW of PC homopolymer fraction | g/mol | 30,500 | 28,100 | 25,800 | 23,400 |
| UL94 Rating, 1.5 mm | | V0 | V0 | V0 | V0 |
| MVR (2.16kg/300°C) | cm³/10min | 6 | 9 | 13 | 18 |
| MV, 100 s⁻¹ | Pa-s | 778 | 537 | 411 | 324 |
| MV, 200 s⁻¹ | Pa-s | 663 | 466 | 398 | 318 |
| MV, 500 s⁻¹ | Pa-s | 499 | 406 | 336 | 276 |
| MV, 1000 s⁻¹ | Pa-s | 382 | 306 | 271 | 223 |
| MV, 2000 s⁻¹ | Pa-s | 288 | 243 | 215 | 179 |
| MV, 3500 s⁻¹ | Pa-s | 205 | 177 | 156 | 133 |
| MV, 5000 s⁻¹ | Pa-s | 163 | 145 | 125 | 110 |
| MV, 7000 s⁻¹ | Pa-s | 134 | 118 | 104 | 90 |
| MV, 9000 s⁻¹ | Pa-s | | | 86 | |
| Mod. of elasticity | MPa | 2116 | 2107 | 2084 | 2074 |
| Tens. strength @ yld | MPa | 57 | 56 | 55 | 54 |
| Tens. strength @ brk | MPa | 66 | 64 | 60 | 51 |
| Tens. elong. @ yld | % | 5 | 5 | 5 | 5 |
| Nominal strain @ brk | % | 108 | 105 | 98 | 66 |
| L* | | 7.1 | 8.6 | 11.2 | 14.2 |
| a* | | -2.1 | -3.0 | -3.2 | -3.3 |
| b* | | -2.8 | -3.3 | -3.4 | -3.6 |

### Examples 8-9

Table 7 shows the compositions and properties for the compositions according to Examples 8 and 9, comparing different types of PC-Si copolymers (e.g., comparing PC-Si-1 having 20% siloxane and PC-Si-2 having 40% siloxane). The amount of each component is expressed in weight percent based on the total weight of the composition.

**Table 7**

| Component | Unit | 8* | 9 |
|---|---|---|---|
| PC-2 | wt% | 36.72 | 63.88 |
| PC-3 | wt% | 36.76 | 17 |
| PC-Si-1 | wt% | | 15 |
| PC-Si-2 | | 22.2 | |
| TBPP | wt% | 0.09 | 0.09 |
| BZT | wt% | 0.3 | 0.3 |
| PETS | wt% | 0.3 | 0.1 |
| TSAN | wt% | 0.3 | 0.3 |
| Yellow Pigment | wt% | 0.03 | 0.03 |
| KSS | wt% | 0.3 | 0.3 |
| TiO₂ | wt% | 3 | 3 |
| Properties | | | |
| | | | |
| MVR, 2.16 kg | cm³/10min | 15.6 | 8.8 |
| MV, 100 s⁻¹ | Pa-s | 395 | 582 |
| MV, 200 s⁻¹ | Pa-s | 341 | 591 |
| MV, 500 s⁻¹ | Pa-s | 320 | 490 |
| MV, 1000 s⁻¹ | Pa-s | 272 | 370 |
| MV, 2000 s⁻¹ | Pa-s | 219 | 261 |
| MV, 3500 s⁻¹ | Pa-s | 161 | 183 |
| MV, 5000 s⁻¹ | Pa-s | 130 | 140 |
| MV, 7000 s⁻¹ | Pa-s | 105 | 119 |
| MV, 9000 s⁻¹ | Pa-s | 85 | 99 |
| standard - average of 5 runs | Strain@brk (%) | 78 | 80 |
| 3 days caustic soda exposure (5%) - average of 5 runs | Strain@brk (%) | 55 | 80 |
| 5 days sun screen exposure - average of 5 runs | Strain@brk (%) | 3.7 | 76 |
| 2 days insect repellant exposure - average of 5 runs | Strain@brk (%) | <1.0 | 82 |
| 1 day gasoline exposure - average of 5 runs | Strain@brk (%) | <1.0 | 28 |

| | | | |
|---|---|---|---|
| * indicates a comparative example | | | |

Table 7 shows that when PC-Si-2 is used in combination was a homopolycarbonate having a molecular weight of 28,000 g/mol or great, a unique balance of MVR and MV can be achieved. Surprisingly, despite a significantly lower MVR, the MV of the composition is comparable, indicating that the composition of the present disclosure will retain good processability.

Comparative Example 8 is considered to be an excellent injection-moldable grade polycarbonate based on the MVR and the MV at 5000 s⁻¹. However, as shown in Table 7, it does not provide the chemical resistance required for some application. In contrast, in the case of Example 9, the use of a PC-Si copolymer having a higher siloxane content and a higher molecular weight homopolycarbonate can provide a composition that advantageously can meet certain color requirements and chemical resistance requirements. It is noted that at first glance the composition according to Example 9 appears to have a lower flow compared to Comparative Example 8 when looking at MVR alone. However, during processing, the flow of the material is better represented by the MV value at the shear rate of 5000 s⁻¹ or higher, where it can be seen that Example 9 only differs by about 10% compared to the viscosity of Comparative Example 8, which would be considered as substantially the same by the skilled person.

### Examples 10-13

Table 8 shows the compositions according to examples 10-13 and illustrates the effect of polycarbonate-siloxane content on various properties. It can be seen from Table 8 that increase the PC-Si component decreases the MVR, but that the MV is not significantly affected, indicating good processability (and in case of higher shear, an opposite trend is visible at 5000 s⁻¹ versus 100 s⁻¹ shear rates, suggesting enhanced processability). The data also shows worsening of color when increasing the amount of PC-Si, but low L* values can still be achieved. Adding the PC-Si-2, for example at a content of 10 to 15% can affect the chemical resistance tests, however, the results indicate that increased amounts of PC-Si can significantly improve chemical resistance.

**Table 8**

| Component | Unit | 10* | 11* | 12 | 13 |
|---|---|---|---|---|---|
| PC-2 | wt% | 97.81 | 92.71 | 87.91 | 83.11 |
| PC-Si-1 | wt% | | 5 | 10 | 15 |
| TBPP | wt% | 0.09 | 0.09 | 0.09 | 0.09 |
| BZT | wt% | 0.3 | 0.3 | 0.3 | 0.3 |
| PETS | wt% | 0.1 | 0.1 | 0.1 | 0.1 |
| TSAN | wt% | 0.5 | 0.6 | 0.4 | 0.2 |
| SG3 | wt% | 0.3 | 0.3 | 0.3 | 0.3 |
| SY163 | wt% | 0.3 | 0.3 | 0.3 | 0.3 |
| SR135 | wt% | 0.3 | 0.3 | 0.3 | 0.3 |
| KSS | wt% | 0.3 | 0.3 | 0.3 | 0.3 |
| Properties | | | | | |
| UL94 Rating, 1.5 mm | | V0 | V0 | V0 | V0 |
| MVR, 2.16 kg | cm³/10min | 11 | 9 | 8 | 7 |
| MV, 100 s⁻¹ | Pa-s | 591 | 626 | 744 | 787 |
| MV, 200 s⁻¹ | Pa-s | 627 | 559 | 651 | 697 |
| MV, 500 s⁻¹ | Pa-s | 549 | 483 | 504 | 528 |
| MV, 1000 s⁻¹ | Pa-s | 459 | 380 | 391 | 394 |
| MV, 2000 s⁻¹ | Pa-s | 332 | 325 | 311 | 303 |
| MV, 3500 s⁻¹ | Pa-s | 234 | 228 | 217 | 211 |
| MV, 5000 s⁻¹ | Pa-s | 184 | 180 | 171 | 166 |
| MV, 7000 s⁻¹ | Pa-s | 150 | 148 | 139 | 137 |
| MV, 9000 s⁻¹ | Pa-s | | 121 | | 110.1 |
| Mod. of elasticity | MPa | 2415 | 2306 | 2218 | 2126 |
| Tens. strength @ yld | MPa | 66 | 62 | 59 | 57 |
| Tens. strength @ brk | MPa | 68 | 68 | 69 | 61 |
| Tens. elong. @ yld | % | 6 | 6 | 6 | 6 |
| Nominal strain @ brk | % | 94 | 101 | 114 | 98 |
| L* | | 1.432 | 9.286 | 9.9 | 7.338 |
| a* | | 0.47 | -2.584 | -3.176 | -2.14 |
| b* | | 0.024 | -0.888 | -2.514 | -2.826 |
| Tens. strain @ brk, 5 days sunscreen exposure - run 1 | % | 3.0 | 4.2 | 71 | 107 |
| Tens. strain @ brk, 5 days sunscreen exposure - run 2 | % | 3.3 | 3.7 | 108 | 106 |
| Tens. strain @ brk, 5 days sunscreen exposure - run 3 | % | 3.6 | 25 | 108 | 109 |
| Tens. strain @ brk, 5 days sunscreen exposure - run 4 | % | 3.5 | 3.7 | 113 | 95 |
| Tens. strain @ brk, 5 days sunscreen exposure - run 5 | % | 3.5 | 3.7 | 93 | 30 |

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "an aspect" means that a particular element described in connection with the aspect is included in at least one aspect described herein, and may or may not be present in other aspects. The term "combination thereof" as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo atoms (e.g., bromo and fluoro), or only chloro atoms can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A polycarbonate composition comprising:
80 to 90 weight percent of a bisphenol A homopolycarbonate having a weight average molecular weight of 28,000 g/mol or more, determined by gel permeation chromatography relative to linear bisphenol A polycarbonate standards; and
10 to 20 weight percent of a polycarbonate-siloxane copolymer having a siloxane content of 30 to 70 weight percent, based on the total weight of the polycarbonate-siloxane copolymer;
wherein the composition comprises less than 5 weight percent of a polycarbonate-siloxane copolymer having a siloxane content of less than 30 weight percent.

2. The polycarbonate composition of claim 1, wherein the polycarbonate composition has a melt volume rate of less than or equal to 10 cm³/10 minutes, as determined according to ISO1133 under a load of 2.16 kg at 300 °C with a dwell time of 300 seconds.

3. The polycarbonate composition of claim 1 or 2, wherein the polycarbonate composition has a melt volume rate of less than or equal to 10 cm³/10 minutes, as determined according to ISO1133 under a load of 2.16 kg at 300 °C with a dwell time of 300 seconds, and a melt viscosity of less than or equal to 200 Pa*s at 5000 s⁻¹ shear rate, measured at 300 °C, according to ISO 11443.

4. The polycarbonate composition of any of claims 1 to 3, wherein the bisphenol A homopolycarbonate has a weight average molecular weight of 29,000 to 45,000 grams per mole, as determined by gel permeation chromatography relative to linear bisphenol A polycarbonate standards.

5. The polycarbonate composition of any of claims 1 to 4, wherein the bisphenol A homopolycarbonate comprises
a first linear bisphenol A homopolycarbonate having a weight average molecular weight of 32,000 to 38,000 grams per mole, preferably 34,000 to 36,000 grams per mole, as determined by gel permeation chromatography relative to linear bisphenol A polycarbonate standards; or
a second linear bisphenol A homopolycarbonate having a weight average molecular weight of 29,000 to 32,000 grams per mole, preferably 30,000 to 31,000 grams per mole, as determined by gel permeation chromatography relative to linear bisphenol A polycarbonate standards; or
a combination thereof.

6. The polycarbonate composition of any of claims 1 to 5, further comprising a bisphenol A homopolycarbonate having a molecular weight of 18,000 to 24,000 g/mol, preferably 20,000 to 22,000 g/mol, as determined by gel permeation chromatography relative to linear bisphenol A polycarbonate standards, provided that a weight ratio of bisphenol A homopolycarbonate having a weight average molecular weight of 28,000 g/mol or more to the bisphenol A homopolycarbonate having a molecular weight of 18,000 to 24,000 g/mol is greater than 1:1, preferably greater than 2:1.

7. The polycarbonate composition of any of claims 1 to 6, wherein the polycarbonate-siloxane copolymer has a siloxane content of 35 to 65 weight percent, based on the total weight of the polycarbonate-siloxane copolymer.

8. The polycarbonate composition of any of claims 1 to 7, wherein the polycarbonate-siloxane copolymer comprises bisphenol A carbonate repeating units and poly(dimethyl siloxane) repeating units.

9. The polycarbonate composition of any of claims 1 to 8, wherein the polycarbonate-siloxane copolymer has a weight average molecular weight of 21,000 to 50,000 g/mol, or 25,000 to 45,000 g/mol, or 30,000 to 45,000 g/mol, or 32,000 to 43,000 g/mol, or 35,000 to 40,000 g/mol, as determined by gel permeation chromatography using a crosslinked styrene-divinyl benzene column, at a sample concentration of 1 milligram per milliliter, and as calibrated with bisphenol A polycarbonate standards.

10. The polycarbonate composition of any of claims 1 to 9, wherein the composition is free of a polycarbonate-siloxane copolymer having a siloxane content of less than 30 weight percent.

11. The polycarbonate composition of any of claims 1 to 10, wherein the polycarbonate composition further comprises 0.1 to 10 weight percent, based on the total weight of the polycarbonate composition, of an additive composition,
preferably wherein the additive composition comprises an antidrip agent, a flame retardant, a colorant composition, or a combination thereof,
more preferably, wherein the additive composition comprises:
0.05 to 1 weight percent of an inorganic flame retardant, preferably comprising a C₁₋₁₆ sulfonate salt, more preferably potassium perfluorobutane sulfonate (Rimar salt), potassium perfluoroctane sulfonate, tetraethylammonium perfluorohexane sulfonate, and potassium diphenylsulfone sulfonate, or a combination thereof; and
optionally 0.01 to 1 weight percent of an antidrip additive.

12. The polycarbonate composition of any of claims 1 to 11, wherein the polycarbonate composition further comprises a flame retardant and a molded sample of the composition exhibits a UL-94 rating of V0 at a thickness of 1.5 millimeters or less; preferably a UL-94 rating of V0 at a thickness of less than or equal to 1.2 millimeters.

13. The polycarbonate composition of any of claims 1 to 12, wherein a molded sample of the composition exhibits an L* value of less than or equal to 10 as measured by the CIE Lab method, 10 degree observer, D65 illuminant, specular component excluded, measured in reflectance mode; or
a tensile strain at break that is at least 50% of the tensile strain at break of a non-exposed reference sample after exposure to sunscreen or insect repellant;
or both.

14. A method of making the polycarbonate composition of any of claims 1 to 12, the method comprising melt-mixing the components of the composition, and, optionally, extruding the composition.

15. An article comprising the polycarbonate composition of any of claims 1 to 13.

## Patentansprüche

1. Polycarbonatzusammensetzung, umfassend:
80 bis 90 Gewichtsprozent eines Bisphenol-A-Homopolycarbonats mit einem gewichtsmittleren Molekulargewicht von 28.000 g/mol oder mehr, bestimmt durch Gelpermeationschromatographie relativ zu linearen Bisphenol-A-Polycarbonat-Standards, und
10 bis 20 Gewichtsprozent eines Polycarbonat-Siloxan-Copolymers mit einem Siloxangehalt von 30 bis 70 Gewichtsprozent, bezogen auf das Gesamtgewicht des Polycarbonat-Siloxan-Copolymers;
wobei die Zusammensetzung weniger als 5 Gewichtsprozent eines Polycarbonat-Siloxan-Copolymers mit einem Siloxangehalt von weniger als 30 Gewichtsprozent umfasst.

2. Polycarbonatzusammensetzung nach Anspruch 1, wobei die Polycarbonatzusammensetzung aufweist eine Schmelzvolumenrate von weniger als oder gleich 10 cm³/10 Minuten, wie bestimmt gemäß ISO1133 unter einer Last von 2,16 kg bei 300 °C mit einer Verweilzeit von 300 Sekunden.

3. Polycarbonatzusammensetzung nach Anspruch 1 oder 2, wobei die Polycarbonatzusammensetzung aufweist eine Schmelzvolumenrate von weniger als oder gleich 10 cm³/10 Minuten, wie bestimmt gemäß ISO1133 unter einer Last von 2,16 kg bei 300 °C mit einer Verweilzeit von 300 Sekunden, und eine Schmelzviskosität von weniger als oder gleich 200 Pa*s bei einer Scherrate von 5000 s⁻¹, gemessen bei 300 °C gemäß ISO11443.

4. Polycarbonatzusammensetzung nach einem der Ansprüche 1 bis 3, wobei das Bisphenol-A-Homopolycarbonat aufweist ein gewichtsmittleres Molekulargewicht von 29.000 bis 45.000 Gramm pro Mol, wie bestimmt durch Gelpermeationschromatographie relativ zu linearen Bisphenol-A-Polycarbonat-Standards.

5. Polycarbonatzusammensetzung nach einem der Ansprüche 1 bis 4, wobei das Bisphenol-A-Homopolycarbonat umfasst
ein erstes lineares Bisphenol-A-Homopolycarbonat mit einem gewichtsmittleren Molekulargewicht von 32.000 bis 38.000 Gramm pro Mol, bevorzugt 34.000 bis 36.000 Gramm pro Mol, wie bestimmt durch Gelpermeationschromatographie relativ zu linearen Bisphenol-A-Polycarbonat-Standards; oder
ein zweites lineares Bisphenol-A-Homopolycarbonat mit einem gewichtsmittleren Molekulargewicht von 29.000 bis 32.000 Gramm pro Mol, bevorzugt 30.000 bis 31.000 Gramm pro Mol, wie bestimmt durch Gelpermeationschromatographie relativ zu linearen Bisphenol-A-Polycarbonat-Standards; oder
eine Kombination davon.

6. Polycarbonatzusammensetzung nach einem der Ansprüche 1 bis 5, ferner umfassend ein Bisphenol-A-Homopolycarbonat mit einem Molekulargewicht von 18.000 bis 24.000 g/mol, bevorzugt 20.000 bis 22.000 g/mol, wie bestimmt durch Gelpermeationschromatographie relativ zu linearen Bisphenol-A-Polycarbonat-Standards, vorausgesetzt, dass ein Gewichtsverhältnis von Bisphenol-A-Homopolycarbonat mit einem gewichtsmittleren Molekulargewicht von 28.000 g/mol oder mehr zu dem Bisphenol-A-Homopolycarbonat mit einem Molekulargewicht von 18.000 bis 24.000 g/mol größer als 1:1, bevorzugt größer als 2:1 ist.

7. Polycarbonatzusammensetzung nach einem der Ansprüche 1 bis 6, wobei das Polycarbonat-Siloxan-Copolymer aufweist einen Siloxangehalt von 35 bis 65 Gewichtsprozent, bezogen auf das Gesamtgewicht des Polycarbonat-Siloxan-Copolymers.

8. Polycarbonatzusammensetzung nach einem der Ansprüche 1 bis 7, wobei das Polycarbonat-Siloxan-Copolymer Bisphenol-A-Carbonat-Wiederholungseinheiten und Poly(dimethylsiloxan)-Wiederholungseinheiten umfasst.

9. Polycarbonatzusammensetzung nach einem der Ansprüche 1 bis 8, wobei das Polycarbonat-Siloxan-Copolymer aufweist ein gewichtsmittleres Molekulargewicht von 21.000 bis 50.000 g/mol oder 25.000 bis 45.000 g/mol oder 30.000 bis 45.000 g/mol oder 32.000 bis 43.000 g/mol oder 35.000 bis 40.000 g/mol, wie bestimmt durch Gelpermeationschromatographie unter Verwendung einer vernetzten Styrol-Divinylbenzol-Säule bei einer Probenkonzentration von 1 Milligramm pro Milliliter und wie kalibriert mit Bisphenol-A-Polycarbonat-Standards.

10. Polycarbonatzusammensetzung nach einem der Ansprüche 1 bis 9, wobei die Zusammensetzung frei von einem Polycarbonat-Siloxan-Copolymer mit einem Siloxangehalt von weniger als 30 Gewichtsprozent ist.

11. Polycarbonatzusammensetzung nach einem der Ansprüche 1 bis 10, wobei die Polycarbonatzusammensetzung ferner 0,1 bis 10 Gewichtsprozent, bezogen auf das Gesamtgewicht der Polycarbonatzusammensetzung, einer Additivzusammensetzung umfasst,
wobei die Additivzusammensetzung bevorzugt umfasst ein Antitropfmittel, ein Flammschutzmittel, eine Farbstoffzusammensetzung oder eine Kombination davon,
wobei die Additivzusammensetzung besonders bevorzugt umfasst:
0,05 bis 1 Gewichtsprozent eines anorganischen Flammschutzmittels, bevorzugt umfassend ein C₁₋₁₆-Sulfonatsalz, besonders bevorzugt Kaliumperfluorbutansulfonat (Rimar-Salz), Kaliumperfluoroktansulfonat, Tetraethylammoniumperfluorhexansulfonat und Kaliumdiphenylsulfonsulfonat oder eine Kombination davon; und
optional 0,01 bis 1 Gewichtsprozent eines Antitropfadditivs.

12. Polycarbonatzusammensetzung nach einem der Ansprüche 1 bis 11, wobei die Polycarbonatzusammensetzung ferner ein Flammschutzmittel umfasst und eine geformte Probe der Zusammensetzung eine UL-94-Einstufung von V0 bei einer Dicke von 1,5 Millimetern oder weniger vorweist; bevorzugt eine UL-94-Einstufung von V0 bei einer Dicke von weniger als oder gleich 1,2 Millimetern.

13. Polycarbonatzusammensetzung nach einem der Ansprüche 1 bis 12, wobei eine geformte Probe der Zusammensetzung einen L*-Wert von weniger als oder gleich 10 vorweist, wie gemessen nach dem CIE-Lab-Verfahren, 10-Grad-Beobachter, D65 Lichtart, spiegelnde Komponente ausgeschlossen, gemessen in Reflexionsmodus; oder
eine Zugdehnung bei Bruch, die mindestens 50 % der Zugdehnung bei Bruch einer nicht exponierten Referenzprobe nach Exposition gegenüber Sonnenschutzmittel oder Insektenabwehrmittel beträgt;
oder beides.

14. Verfahren zur Herstellung der Polycarbonatzusammensetzung nach einem der Ansprüche 1 bis 12, wobei das Verfahren Schmelzmischen der Komponenten der Zusammensetzung und optional Extrudieren der Zusammensetzung umfasst.

15. Gegenstand, umfassend die Polycarbonatzusammensetzung nach einem der Ansprüche 1 bis 13.

## Revendications

1. Composition de polycarbonate comprenant :
de 80 à 90 % en poids d'un homopolycarbonate de bisphénol A ayant une masse molaire moyenne en poids de 28 000 g/mol ou plus, déterminée par chromatographie par perméation de gel par rapport à des étalons de polycarbonate de bisphénol A linéaire ; et
de 10 à 20 % en poids d'un copolymère polycarbonate-siloxane ayant une teneur en siloxane de 30 à 70 % en poids, sur la base du poids total du copolymère polycarbonate-siloxane ;
la composition comprenant moins de 5 % en poids d'un copolymère polycarbonate-siloxane ayant une teneur en siloxane inférieure à 30 % en poids.

2. Composition de polycarbonate selon la revendication 1, dans laquelle la composition de polycarbonate présente un taux de volume fondu inférieur ou égal à 10 cm³/10 minutes, déterminé selon la norme ISO 1133 sous une charge de 2,16 kg à 300 °C avec un temps de maintien de 300 secondes.

3. Composition de polycarbonate selon la revendication 1 ou 2, dans laquelle la composition de polycarbonate présente un taux de volume fondu inférieur ou égal à 10 cm³/10 minutes, déterminé selon la norme ISO 1133 sous une charge de 2,16 kg à 300 °C avec un temps de maintien de 300 secondes, et une viscosité à l'état fondu inférieure ou égale à 200 Pa·s à une vitesse de cisaillement de 5 000 s⁻¹, mesurée à 300 °C, selon la norme ISO 11443.

4. Composition de polycarbonate selon l'une quelconque des revendications 1 à 3, dans laquelle l'homopolycarbonate de bisphénol A a une masse molaire moyenne en poids comprise entre 29 000 et 45 000 grammes par mol, déterminée par chromatographie par perméation de gel par rapport à des étalons de polycarbonate de bisphénol A linéaire.

5. Composition de polycarbonate selon l'une quelconque des revendications 1 à 4, dans laquelle l'homopolycarbonate de bisphénol A comprend
un premier homopolycarbonate de bisphénol A linéaire ayant une masse molaire moyenne en poids comprise entre 32 000 et 38 000 grammes par mol, de préférence entre 34 000 et 36 000 grammes par mol, déterminée par chromatographie par perméation de gel par rapport à des étalons de polycarbonate de bisphénol A linéaire ; ou
un second homopolycarbonate de bisphénol A linéaire ayant une masse molaire moyenne en poids comprise entre 29 000 et 32 000 grammes par mol, de préférence entre 30 000 et 31 000 grammes par mol, déterminée par chromatographie par perméation de gel par rapport à des étalons de polycarbonate de bisphénol A linéaire, ou
une combinaison de ceux-ci.

6. Composition de polycarbonate selon l'une quelconque des revendications 1 à 5, comprenant en outre un homopolycarbonate de bisphénol A ayant une masse molaire comprise entre 18 000 et 24 000 g/mol, de préférence entre 20 000 et 22 000 g/mol, déterminée par chromatographie par perméation de gel par rapport à des étalons de polycarbonate de bisphénol A linéaire, à condition que le rapport pondéral entre l'homopolycarbonate de bisphénol A ayant une masse molaire moyenne en poids de 28 000 g/mol ou plus et l'homopolycarbonate de bisphénol A ayant une masse molaire comprise entre 18 000 et 24 000 g/mol soit supérieur à 1:1, de préférence supérieur à 2:1.

7. Composition de polycarbonate selon l'une quelconque des revendications 1 à 6, dans laquelle le copolymère polycarbonate-siloxane a une teneur en siloxane comprise entre 35 et 65 % en poids, sur la base du poids total du copolymère polycarbonate-siloxane.

8. Composition de polycarbonate selon l'une quelconque des revendications 1 à 7, dans laquelle le copolymère polycarbonate-siloxane comprend des unités répétitives de carbonate de bisphénol A et des unités répétitives de polydiméthylsiloxane.

9. Composition de polycarbonate selon l'une quelconque des revendications 1 à 8, dans laquelle le copolymère polycarbonate-siloxane a une masse molaire moyenne en poids comprise entre 21 000 et 50 000 g/mol, ou entre 25 000 et 45 000 g/mol, ou entre 30 000 et 45 000 g/mol, ou entre 32 000 et 43 000 g/mol, ou entre 35 000 et 40 000 g/mol, déterminée par chromatographie par perméation de gel utilisant une colonne de styrène-divinylbenzène réticulée, à une concentration d'échantillon de 1 milligramme par millilitre, et étalonnée avec des étalons de polycarbonate de bisphénol A.

10. Composition de polycarbonate selon l'une quelconque des revendications 1 à 9, dans laquelle la composition est exempte de copolymère polycarbonate-siloxane ayant une teneur en siloxane inférieure à 30 % en poids.

11. Composition de polycarbonate selon l'une quelconque des revendications 1 à 10, dans laquelle la composition de polycarbonate comprend en outre de 0,1 à 10 % en poids, sur la base du poids total de la composition de polycarbonate, d'une composition d'additifs,
de préférence, la composition d'additifs comprenant un agent anti-goutte, un retardateur de flamme, une composition colorante ou une combinaison de ceux-ci,
plus préférentiellement, la composition d'additifs comprenant :
de 0,05 à 1 % en poids d'un retardateur de flamme inorganique, comprenant de préférence un sel de sulfonate en C₁₋₁₆, plus préférentiellement du sulfonate de perfluorobutane de potassium (sel Rimar), du sulfonate de perfluorooctane de potassium, du sulfonate de perfluorohexane de tétraéthylammonium, et du sulfonate de diphénylsulfone de potassium, ou une combinaison de ceux-ci ; et
de façon optionnelle de 0,01 à 1 % en poids d'un additif anti-goutte.

12. Composition de polycarbonate selon l'une quelconque des revendications 1 à 11, dans laquelle la composition de polycarbonate comprend en outre un retardateur de flamme, et un échantillon moulé de la composition présente un classement UL-94 de V0 à une épaisseur de 1,5 mm ou moins ; de préférence un classement UL-94 de V0 à une épaisseur inférieure ou égale à 1,2 mm.

13. Composition de polycarbonate selon l'une quelconque des revendications 1 à 12, dans laquelle un échantillon moulé de la composition présente une valeur L* inférieure ou égale à 10, mesurée selon la méthode CIE Lab, observateur de 10 degrés, illuminant D65, composante spéculaire exclue, mesurée en mode réflexion ; ou
un allongement en traction à la rupture correspondant à au moins 50 % de l'allongement en traction à la rupture d'un échantillon de référence non exposé après exposition à une crème solaire ou un répulsif contre les insectes ;
ou les deux.

14. Procédé de fabrication de la composition de polycarbonate selon l'une quelconque des revendications 1 à 12, le procédé comprenant le mélange en fusion des composants de la composition, et, de façon optionnelle, l'extrusion de la composition.

15. Article comprenant la composition de polycarbonate selon l'une quelconque des revendications 1 à 13.
